# FASCICULE DE BREVET EUROPEEN

(11) **EP 2 966 663 B1**
(45) Date de publication et mention de la délivrance du brevet: **01.03.2017**
(21) Numéro de dépôt: 15172349.1
(22) Date de dépôt: 16.06.2015
(51) Int. Cl.: H01H 3/02, H01H 9/16, G06K 19/07, H02K 35/00

(54) **DISPOSITIF D'ARRÊT D'URGENCE**
NOTHALTEINRICHTUNG
EMERGENCY STOP DEVICE

(30) Priorité: 09.07.2014 FR 1456619
(43) Date de publication de la demande: 13.01.2016
(73) Titulaire: Schneider Electric Industries SAS, 92500 Rueil-Malmaison (FR)
(72) Inventeur: CHAUVET, Francis, 16440 Mouthiers (FR); MEFTAH, Tewfik, 38100 Grenoble (FR); BENNI, Dominique, 16600 Mornac (FR)
(74) Mandataire: Dufresne, Thierry

(56) Documents cités:
- WO-A1-2012/025335
- DE-A1-102011 109 381
- FR-A1- 3 000 286

## Description

### Domaine technique de l'invention

La présente invention se rapporte à un dispositif d'arrêt d'urgence. L'invention concerne plus précisément le déverrouillage du dispositif d'arrêt d'urgence, après un actionnement.

### Etat de la technique

Un dispositif d'arrêt d'urgence est destiné à ouvrir un circuit électrique en cas d'urgence, par exemple lors d'un dysfonctionnement ou d'un danger imminent. Pour cela, il comporte un bouton de commande sur lequel vient agir un opérateur. Une pression sur ce bouton de commande entraîne une ouverture d'un circuit électrique de commande. Dans un tel dispositif, une fois le bouton de commande enfoncé, celui-ci reste dans cette position, de sorte que le circuit électrique reste ouvert tant que le danger n'est pas écarté. Pour relancer le système, le dispositif d'arrêt d'urgence doit d'abord être déverrouillé. Souvent, le déverrouillage d'un arrêt d'urgence est sécurisé. Pour cela, différentes solutions ont déjà été mises en oeuvre pour déverrouiller un dispositif d'arrêt d'urgence. La plus connue utilise une clé comme par exemple dans le brevet EP1261978B1. Cependant la gestion des clés s'avère souvent peu pratique. Une autre solution est décrite dans la demande de brevet DE102011109381A1. Elle emploie un lecteur biométrique de manière à n'autoriser le déverrouillage qu'après authentification de l'opérateur. Cette dernière solution présente l'avantage d'éliminer le problème de gestion des clés mais nécessite la présence d'une source d'énergie pour alimenter le lecteur biométrique.

Le but de l'invention est de proposer un dispositif d'arrêt d'urgence dans lequel le déverrouillage est sécurisé par authentification et qui ne nécessite aucune source d'énergie électrique interne ou externe.

### Exposé de l'invention

Ce but est atteint par un dispositif d'arrêt d'urgence comportant :
- au moins une unité de contact électrique de type normalement fermé,
- un ensemble de commande actionnable en translation suivant un axe de commande entre une position relâchée et une position actionnée et coopérant avec l'unité de contact,
- un organe de verrouillage coopérant avec l'ensemble de commande et apte à prendre une position de verrouillage pour maintenir l'ensemble ce commande dans sa position actionnée,
- un dispositif de lecture comprenant un microcontrôleur agencé pour générer une commande d'autorisation de déverrouillage de l'ensemble de commande,
- un actionneur de déverrouillage agencé pour recevoir la commande d'autorisation de déverrouillage et pour agir sur l'organe de verrouillage en vue de libérer l'ensemble de commande de sa position actionnée,
- un organe d'actionnement actionnable en mouvement pour générer une énergie mécanique,
- un générateur d'énergie agencé pour convertir l'énergie mécanique fournie par un mouvement de l'organe d'actionnement en une énergie électrique destinée à alimenter le dispositif de lecture.

Lorsqu'un dispositif d'arrêt d'urgence est actionné, celui-ci coupe l'alimentation électrique principale, ce qui rend difficile l'alimentation électrique d'un dispositif de lecture employé pour le déverrouillage. Une source d'énergie interne est alors nécessaire. La solution de l'invention permet donc de s'affranchir de la source d'énergie interne et ainsi de pouvoir déverrouiller le dispositif d'arrêt d'urgence dans toutes les situations.

Selon une variante de réalisation, le dispositif de lecture est de type RFID et il comporte une antenne connectée au microcontrôleur.

Selon une autre particularité, l'antenne est agencée de manière coaxiale autour de l'axe de commande.

Selon une autre particularité, le dispositif comporte un prolongateur d'antenne agencé pour être en couplage magnétique avec ladite antenne.

Selon une autre variante de réalisation, le dispositif de lecture est de type biométrique.

Selon une autre variante de réalisation, le dispositif de lecture est de type NFC.

Selon une autre particularité, l'ensemble de commande comporte un bouton de commande mobile suivant la direction axiale entre une position relâchée et une position enfoncée.

Selon une autre particularité, le bouton de commande comporte un logement agencé pour recevoir un badge.

Selon une autre particularité, l'actionneur de déverrouillage comporte un solénoïde doté d'un poussoir et d'une bobine électromagnétique agencée pour être alimentée par le signal d'autorisation de déverrouillage.

Selon une autre particularité, l'organe d'actionnement est une bague mobile en rotation, agencée de manière coaxiale à l'ensemble de commande.

Selon une autre particularité, le générateur est de type électromagnétique et comporte un élément mobile coopérant avec l'organe d'actionnement, au moins un aimant permanent et une bobine électromagnétique agencés pour se déplacer l'un par rapport à l'autre en vue de créer un courant électrique induit dans ladite bobine électromagnétique.

### Brève description des figures

D'autres caractéristiques et avantages vont apparaître dans la description détaillée qui suit faite en regard des dessins annexés dans lesquels :
- la figure 1 représente, vu en éclaté, le dispositif d'arrêt d'urgence de l'invention,
- la figure 2 représente, vu en éclaté, le support du dispositif d'arrêt d'urgence destiné à recevoir notamment un générateur d'énergie électromagnétique rotatif, la carte à circuits imprimés et l'actionneur de déverrouillage,
- la figure 3 représente, vu en éclaté, le support du dispositif d'arrêt d'urgence destiné à recevoir notamment un générateur d'énergie électromagnétique à pont basculant, la carte à circuits imprimés et l'actionneur de déverrouillage,
- la figure 4 représente, en vue de dessus, le dispositif d'arrêt d'urgence de l'invention,
- la figure 5 représente le dispositif d'arrêt d'urgence de l'invention en position relâchée selon la coupe A-A définie sur la figure 4,
- la figure 6 représente le dispositif d'arrêt d'urgence de l'invention en position relâchée, selon la coupe B-B définie sur la figure 4,
- la figure 7 représente le dispositif d'arrêt d'urgence de l'invention en position actionnée et verrouillée selon la même coupe A-A définie sur la figure 4 et prêt à recevoir un badge de déverrouillage,
- la figure 8 représente, en vue de dessus, le dispositif d'arrêt d'urgence de l'invention en position actionnée et bague tournée pour génération d'énergie électrique,
- la figure 9 représente le dispositif d'arrêt d'urgence de l'invention selon la coupe C-C définie sur la figure 8,

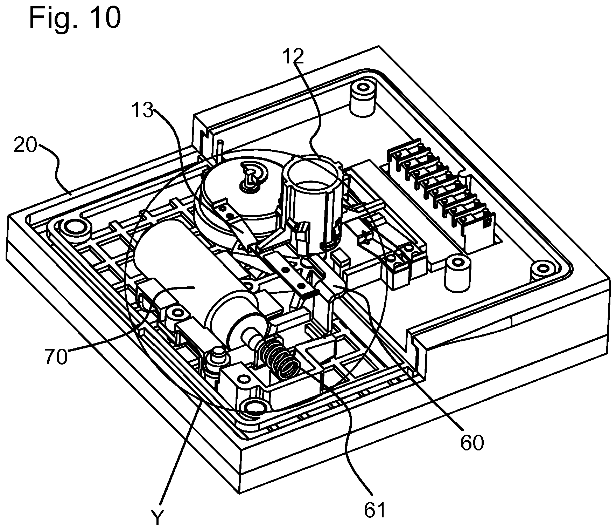

- la figure 10 représente la platine telle que représentée sur la figure 1 sur laquelle est assemblé le support, supportant notamment l'organe de commande, le générateur d'énergie, l'actionneur de déverrouillage,

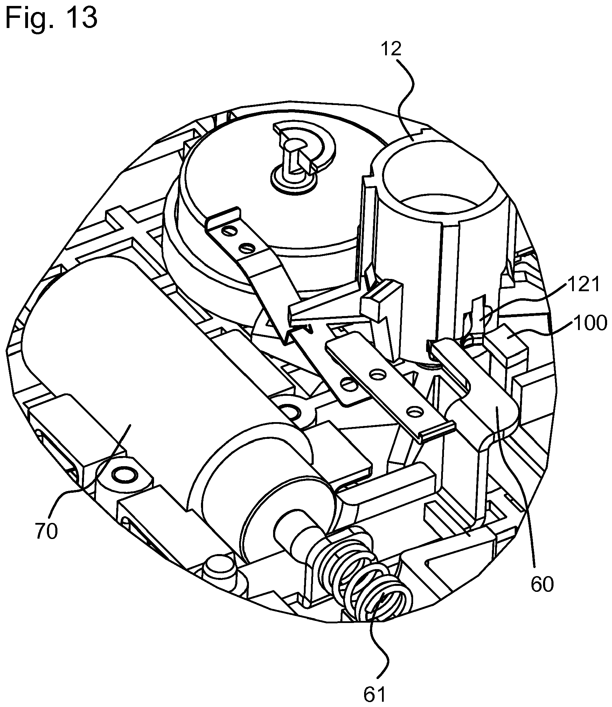

- les figures 11, 12, 13, 14 représentent le détail Y référencé sur la figure 10 dans les différentes phases de fonctionnement du dispositif.

### Description détaillée d'au moins un mode de réalisation

Le dispositif d'arrêt d'urgence de l'invention comporte un boîtier et une tête de commande rapportée sur le boîtier. Le boîtier comporte une platine 20 formant un fond du dispositif et un couvercle 22 sur lequel est rapportée la tête de commande. Le dispositif comporte également un support 21 logé dans le boîtier et sur lequel est fixée une carte à circuits imprimés 23.

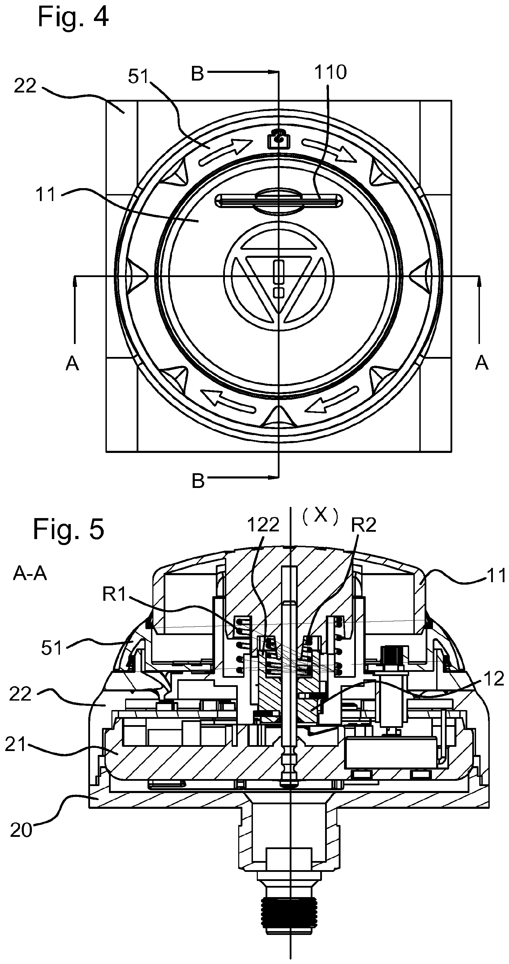

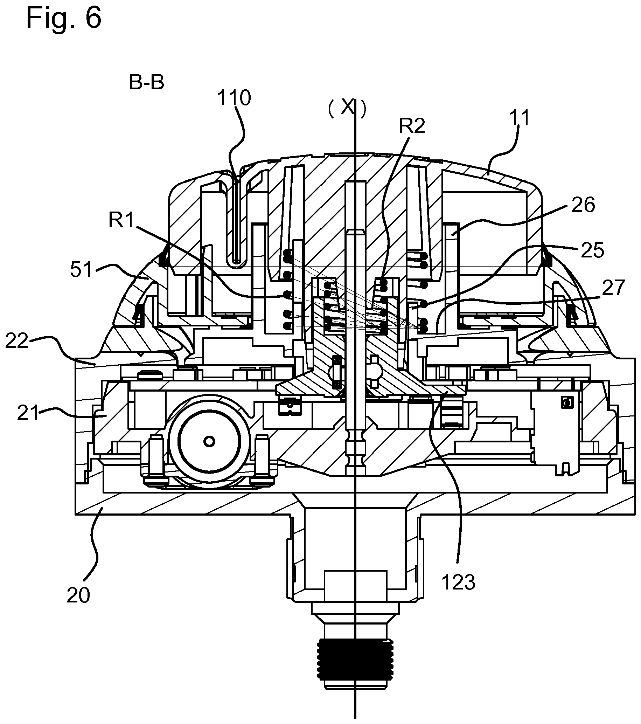

Le couvercle 22 comporte une ouverture centrale 24, une collerette 25 cylindrique formée en périphérie de ladite ouverture centrale, un manchon 26 cylindrique interne et une cuvette 27 annulaire définie entre la collerette et le manchon (figures 5 et 6).

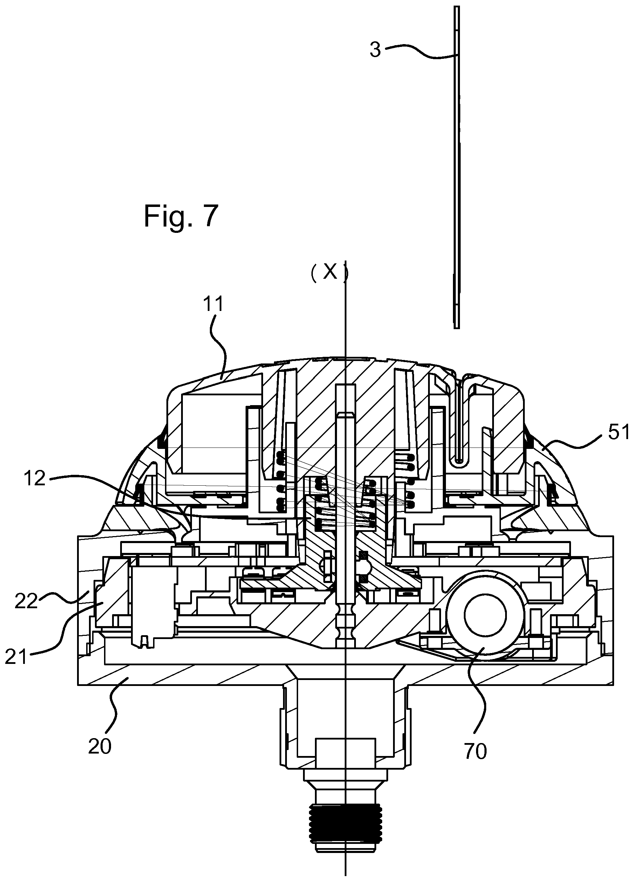

La tête de commande comporte un ensemble de commande du dispositif d'arrêt d'urgence. Cet ensemble de commande comporte un bouton de commande 11 mobile apte à se déplacer selon un axe de commande (X) et un ressort de rappel R1 de type hélicoïdal logé dans la cuvette 27 et sollicité suivant l'axe de commande (X) par le bouton de commande 11 contre le boîtier. Le bouton de commande 11 est initialement dans une position relâchée (figures 5 et 6) dans laquelle le circuit électrique commandé est fermé. Par pression vers l'intérieur du dispositif, le bouton de commande 11 peut être amené dans une position actionnée (figure 7) dans laquelle il vient en butée contre le boîtier, permettant alors d'ouvrir de manière positive le circuit électrique. Après actionnement, le bouton de commande 11 est relâché mais reste alors accroché dans sa position actionnée (figure 7) dans laquelle le circuit électrique reste ouvert. Le circuit électrique reste ouvert jusqu'à ce que le dispositif soit déverrouillé.

L'ensemble de commande du dispositif d'arrêt d'urgence comporte également un organe de commande 12 accroché au bouton de commande 11 par l'intermédiaire d'organes de fixation réalisés sur le bouton de commande 11. L'organe de commande 12 comporte un perçage central axial et une collerette 122 située en périphérie dudit perçage définissant un siège destiné à recevoir un ressort d'ouverture R2 en appui d'une part contre l'organe de commande12 et d'autre part contre le bouton de commande 11. L'organe de commande 12 est sollicité en translation suivant l'axe de commande (X) par le ressort d'ouverture R2 contre les organes de fixation du bouton de commande 11. Le bouton de commande 11 et l'organe de commande 12 sont libres en translation l'un vers l'autre par compression du ressort d'ouverture R2. Lorsque le bouton de commande 11 est en position relâchée, l'organe de commande 12 est dans une position relâchée (figures 5 et 6). Lorsqu'une pression est exercée sur le bouton de commande 11 vers sa position actionnée, l'organe de commande 12 reste d'abord en position relâchée ce qui entraîne une compression du ressort d'ouverture R2 pour emmagasiner de l'énergie. Lorsque le ressort d'ouverture R2 est suffisamment comprimé, l'organe de commande 12 est libéré brusquement, entraîné par l'énergie emmagasinée par le ressort d'ouverture R2. L'organe de commande 12 est alors en position actionnée (figure 7). Après actionnement, l'organe de commande 12 reste accroché en position actionnée et maintient, par l'intermédiaire des organes de fixation, le bouton de commande 11 en position actionnée vers l'intérieur du boîtier 10. Si le bouton de commande est relâché, celui-ci reste en position actionnée. Un déverrouillage est alors nécessaire pour ramener le bouton de commande et l'organe de commande dans leur position relâchée.

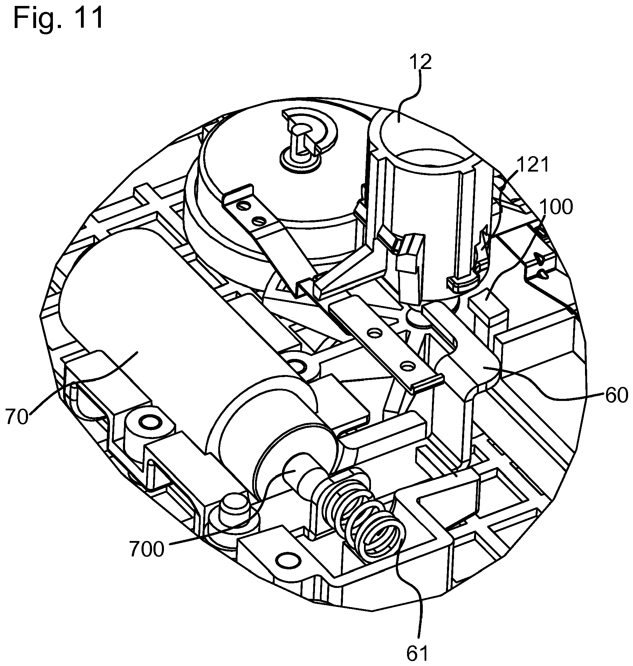

L'ensemble de commande du dispositif d'arrêt d'urgence comporte ainsi un organe d'accrochage 121 (figure 11) par exemple composé d'un doigt venant se loger dans un logement radial réalisé sur l'organe de commande 12 et permettant de maintenir l'ensemble de commande dans la position actionnée. Cet organe d'accrochage 121 est monté sur un ressort hélicoïdal de manière à pouvoir se déplacer de manière radiale par rapport à l'axe de commande (X). L'organe d'accrochage 121 est positionné de manière à coopérer avec le boîtier selon la position du bouton de commande 11. L'organe d'accrochage 121 est susceptible de se déplacer suivant un plan perpendiculaire à l'axe de commande (X). L'organe d'accrochage 121 coopère avec une butée 100 réalisée sur le boîtier pour permettre d'accrocher l'organe de commande 12 au boîtier lorsque le bouton de commande 11 est enfoncé dans sa position actionnée et ainsi de maintenir l'organe de commande 12 et le bouton de commande 11 dans leur position actionnée.

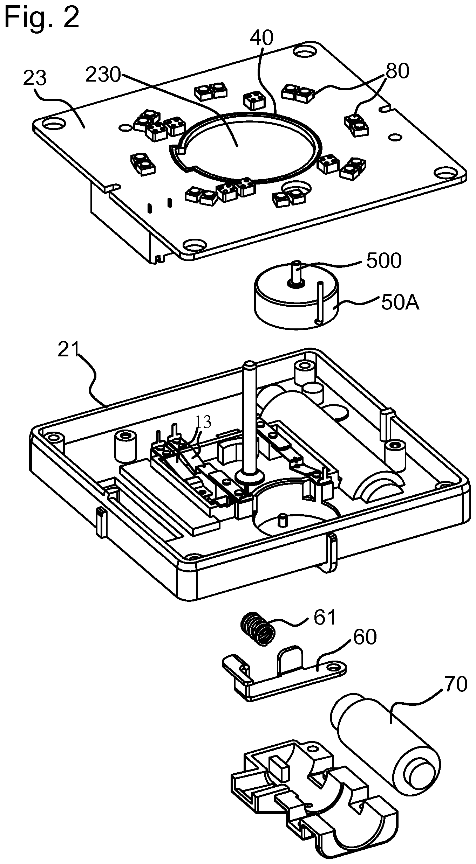

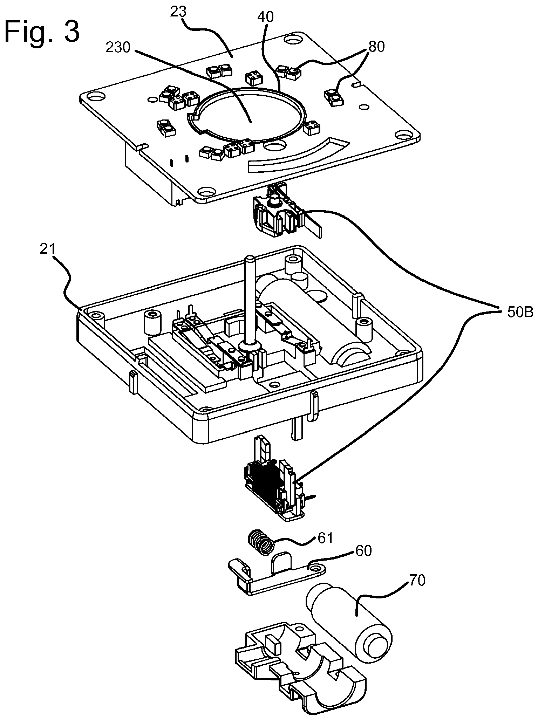

Le dispositif d'arrêt d'urgence comporte au moins une unité de contact électrique, généralement au moins deux unités de contact électrique pour assurer une redondance lors de l'actionnement du dispositif. Chaque unité de contact électrique comporte un jeu de contacts électriques normalement fermé (contacts NC pour "Normally Closed"). Chaque unité de contacts, est par exemple composée d'un ou plusieurs contacts à lame souple 13 à ouverture positive logés dans le boîtier et fixés sur le support 21 logé dans le boîtier du dispositif, sous la carte à circuits imprimés 23. L'organe de commande 12 est muni de deux doigts 123 s'étendant vers l'extérieur dans des directions radiales opposées. Chaque doigt 123 est agencé de manière à pouvoir appuyer sur un contact à lame souple 13 d'une unité de contact distincte lorsque l'organe d'actionnement 12 est entraîné par le ressort d'ouverture R2 vers sa position actionnée. La carte à circuits imprimés 23 est munie d'une ouverture 230 (figures 2 et 3), permettant à l'organe de commande 12 de la traverser et d'aller agir sur les unités de contact fixées sur le support 21.

Selon l'invention, le dispositif d'arrêt d'urgence comporte également un dispositif de lecture agencé pour autoriser ou non le déverrouillage du dispositif d'arrêt d'urgence après avoir réalisé une procédure d'identification. Le dispositif de lecture peut se présenter sous la forme d'un lecteur de badge, par exemple de type RFID, d'un lecteur biométrique ou de toute autre solution permettant l'identification d'une personne autorisée. Le dispositif de lecture comporte ainsi un microcontrôleur, par exemple soudé sur la carte à circuits imprimés 23, agencé pour générer un signal d'autorisation de déverrouillage en cas d'identification positive.

Dans la suite de la description, nous prendrons l'exemple d'un dispositif de lecture de badge de type RFID. Dans cette solution, le bouton de commande 11 comporte un logement 110, ayant la forme d'une fente dans laquelle vient s'insérer le badge 3 à lire par le dispositif. Pour lire le badge 3, le dispositif de lecture comporte une antenne 40 connectée au microcontrôleur. Cette antenne 40 est par exemple réalisée par sérigraphie sur la carte à circuits imprimés 23. La sérigraphie est par exemple réalisée sur le pourtour de l'ouverture 230 réalisée sur la carte à circuits imprimés 23. Par ailleurs, le dispositif de lecture peut comporter un prolongateur d'antenne 41 agencé dans la tête de commande et positionné en couplage magnétique avec l'antenne 40 réalisée par sérigraphie. Ce prolongateur d'antenne 41 a par exemple la forme d'un manchon cylindrique composé d'une pièce en matériau plastique recouverte d'une couche métallique. Le prolongateur d'antenne 41 pourrait également prendre la forme d'une étiquette électronique de type RFID comportant une antenne employée pour prolonger le signal et un microcontrôleur pouvant stocker des données. Cette étiquette serait lisible de l'extérieur à l'aide d'une station de lecture, permettant de récupérer facilement les données mémorisées dans l'étiquette.

Le dispositif d'arrêt d'urgence de l'invention présente la particularité de ne pas présenter de source d'énergie interne ou externe pour alimenter le dispositif de lecture. L'alimentation du dispositif de lecture est en effet réalisée à l'aide d'un générateur d'énergie électromagnétique, agencé pour convertir une énergie mécanique en une énergie électrique.

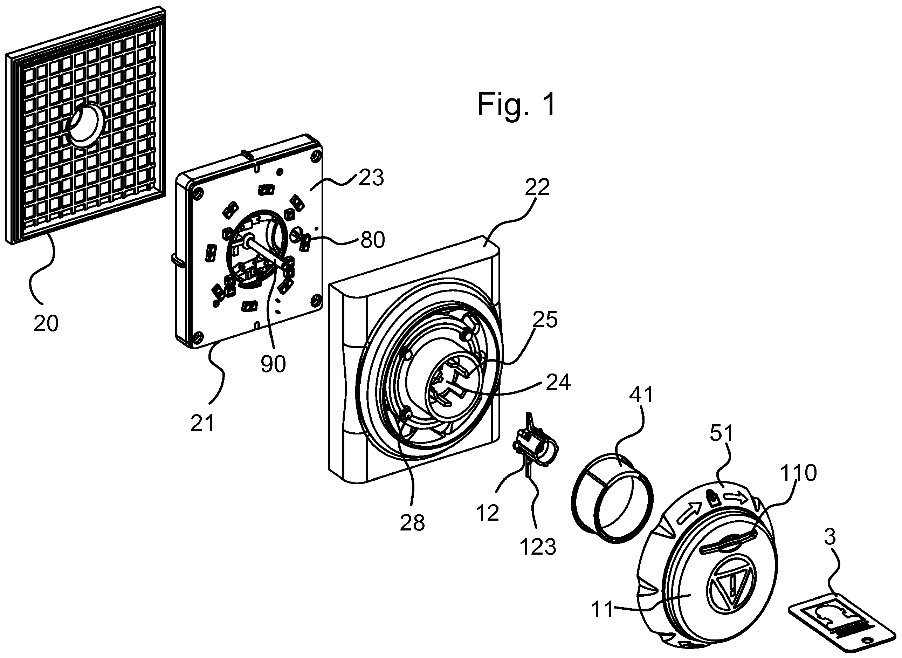

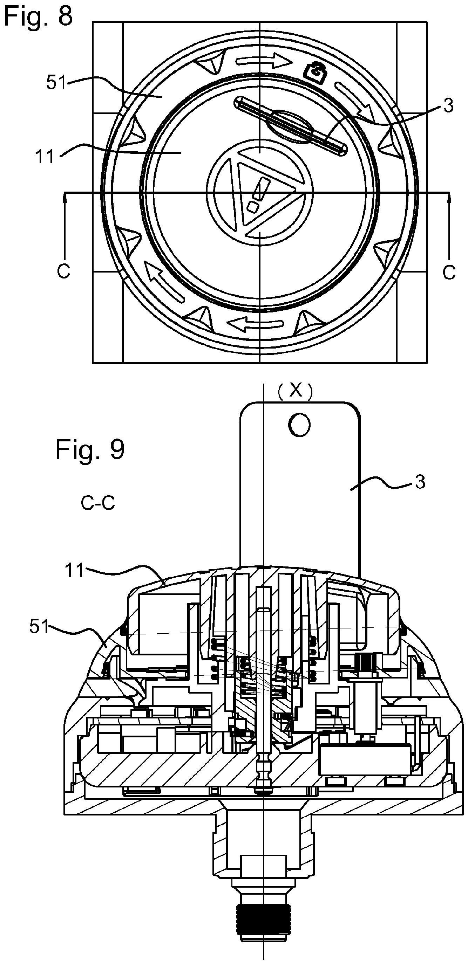

La tête de commande comporte alors un organe d'actionnement couplé mécaniquement au générateur d'énergie 50A, 50B et actionnable en mouvement en vue de générer ladite énergie mécanique. Avantageusement, cet organe d'actionnement est composé d'une bague 51 distincte de l'ensemble de commande et mobile en rotation autour de l'axe de commande (X). Cette bague 51 est par exemple agencée autour du bouton de commande 11 et est agencée pour entraîner l'ensemble de commande en rotation lorsqu'elle est actionnée. Des moyens de guidage en rotation sont par exemple réalisés sur la bague 51 tandis que des pions 28 (figure 1) agencés pour coopérer avec ces moyens de guidage sont réalisés sur le couvercle 22 du boîtier. La bague 51 est agencée pour effectuer une rotation d'un angle déterminé défini par la position des pions 28. Cet angle est par exemple d'environ 25° (figure 8). Au moins une partie de la course ou toute la course en rotation de la bague est employée pour la génération d'énergie électrique.

Le générateur d'énergie 50A, 50B est agencé pour alimenter, en énergie électrique, le microcontrôleur lors d'une procédure d'identification d'un badge et un actionneur de déverrouillage.

Le générateur d'énergie 50A, 50B peut prendre différentes configurations. Sur les figures annexées, deux configurations distinctes sont présentées (figures 2 et 3). Dans une première configuration représentée sur la figure 2, le générateur d'énergie 50A est de type rotatif. Il comporte alors un élément mobile 500 rotatif couplé mécaniquement avec la bague 51 et agencé pour être entraîné en rotation par la bague lors d'une rotation de celle-ci. Ce type de générateur est bien connu et n'est donc pas décrit précisément dans la présente description. Dans une deuxième configuration représentée sur la figure 3, le générateur d'énergie 50B est tel que décrit dans le brevet US8148856B2. Il comporte un circuit magnétique doté d'une partie fixe 501 traversant une bobine électromagnétique 503 et une partie mobile 502 comprenant un aimant permanent. La partie mobile 502 pivote entre deux positions extrêmes en vue de créer une variation de flux à travers la bobine 503 ce qui génère un courant électrique dans l'enroulement de la bobine. En vue de générer le maximum d'énergie électrique possible, ce générateur d'énergie 50B peut être amené à effectuer plusieurs allers-retours entre ses deux positions extrêmes.

Le dispositif d'arrêt d'urgence comporte également un organe de verrouillage agencé pour coopérer avec l'organe de commande 12 pour verrouiller le retour de l'ensemble de commande vers la position relâchée, tant qu'un badge n'a pas été authentifié par le dispositif de lecture. Sur les figures annexées, cet organe de verrouillage a la forme d'un levier 60 sur lequel peut venir agir l'actionneur de déverrouillage 70. Bien entendu, il faut comprendre que l'organe de verrouillage peut prendre bien d'autres formes dès l'instant qu'il remplit la fonction de verrouillage de l'ensemble de commande en position actionnée. Le levier 60 employé présente une extrémité libre agencée pour coopérer avec l'organe d'accrochage 121 pour bloquer le mouvement de l'ensemble de commande et empêcher son retour vers la position relâchée tant que le dispositif de lecture n'a pas identifié positivement un badge. Selon la configuration, on peut envisager que le blocage de l'organe de commande 12 soit réalisé en rotation dans le plan perpendiculaire à l'axe de commande (X) ou en translation suivant l'axe de commande (X). Le levier 60 est monté sur un ressort 61 le sollicitant en pivotement vers sa position de verrouillage de l'organe de commande 12.

L'actionneur de déverrouillage 70 est alimenté par une commande électrique d'autorisation de déverrouillage envoyée par le dispositif de lecture en cas d'identification positive. Il comporte par exemple un solénoïde et un poussoir 700 agencés pour coopérer avec le levier 60 pour déverrouiller l'ensemble de commande.

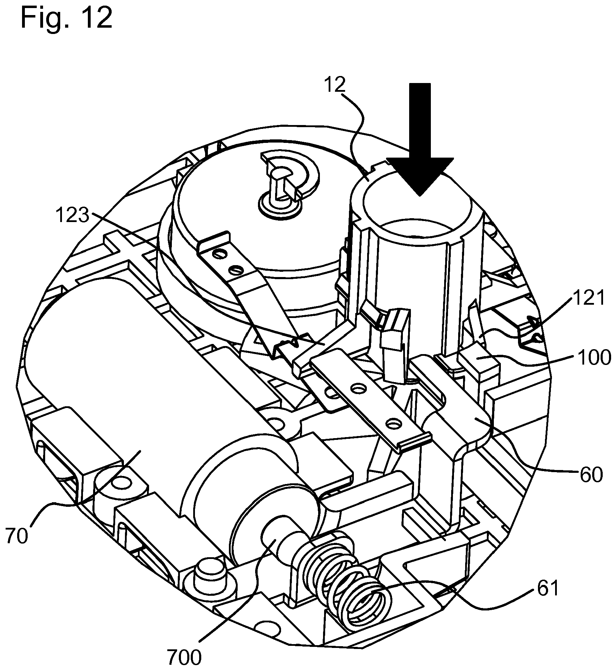

En liaison avec les figures annexées, le fonctionnement d'un dispositif d'arrêt d'urgence de l'invention connecté sur un circuit électrique est le suivant :
- l'ensemble de commande est initialement en position relâchée et est déverrouillé (figures 5, 6 et 11). Les contacts 13 du dispositif sont initialement à l'état fermé.
- Un opérateur appuie sur le bouton de commande 11. L'ensemble de commande est entraîné en translation jusque dans sa position actionnée. Les contacts 13 sont commandés à l'état ouvert par les doigts 123 de l'organe de commande 12. L'organe d'accrochage 121 est libéré de son logement et coopère avec la butée 100 formée sur le boîtier pour accrocher l'organe de commande 12 et empêcher ainsi la remontée de l'ensemble de commande vers sa position relâchée, maintenant ainsi les contacts à l'état ouvert (figure 12). Le dispositif d'arrêt d'urgence est alors verrouillé et une opération de déverrouillage est alors nécessaire pour le ramener dans son état initial.

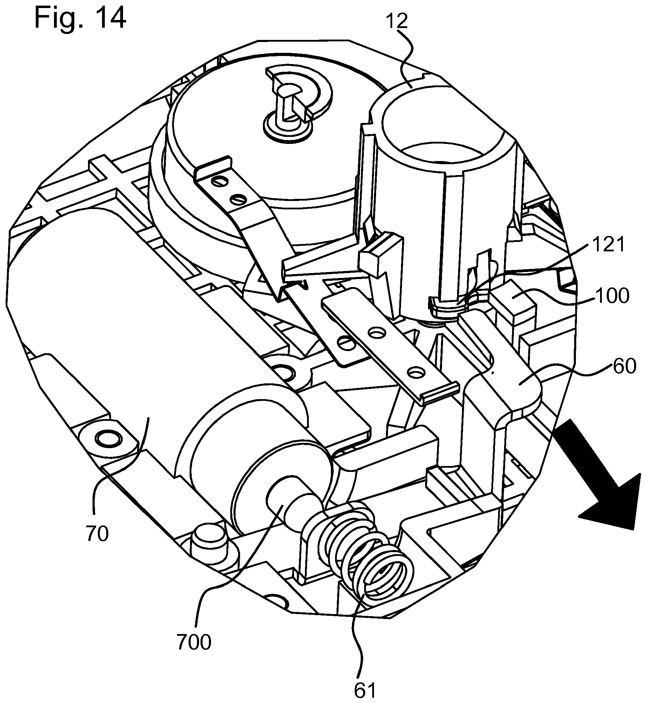

- Pour déverrouiller le dispositif, un opérateur introduit un badge 3 de déverrouillage dans la fente 110 prévue sur le bouton de commande 11.
- L'opérateur effectue ensuite une rotation de la bague 51 en vue de générer une énergie électrique. La rotation de la bague 51 entraîne l'ensemble de commande en rotation, libérant l'organe d'accrochage 121 de la butée 100. La rotation de la bague 51 entraîne également l'actionnement du générateur d'énergie 50A, 50B.
- L'énergie électrique générée grâce à l'énergie mécanique issue de la rotation de la bague 51 alimente le dispositif de lecture pour identification du badge 3.
- A l'aide de l'énergie électrique reçue, le dispositif de lecture lit le badge 3 introduit et vérifie son identité.
- Si l'identification du badge est positive, le dispositif de lecture génère une commande électrique d'autorisation de déverrouillage à destination de l'actionneur de déverrouillage 70.
- L'actionneur de déverrouillage 70 actionne son poussoir 700 qui vient pousser le levier 60 (figure 14)
- Le levier 60 pivote autour de son axe et se dégage de l'organe d'accrochage 121.
- L'ensemble de commande est libéré et remonte vers sa position relâchée sous l'action du ressort de rappel R1 et du ressort d'ouverture R2.
- L'ensemble de commande est en position relâchée et déverrouillé. Le dispositif est de nouveau opérationnel.
- Si l'identification du badge 3 par le dispositif de lecture est négative, l'actionneur de déverrouillage 70 n'est pas activé par le dispositif de lecture.
- Le levier de déverrouillage 60 bloque le mouvement de l'organe d'actionnement 12 et donc de l'ensemble de commande qui ne peut continuer sa course vers sa position relâchée. La bague 51 est rappelée vers sa position initiale. Une nouvelle rotation de la bague 51 sera alors nécessaire pour commander une nouvelle identification.

Comme représenté sur les figures 1 et 2, le dispositif comporte avantageusement des diodes de signalisation 80 (figures 1 à 3) soudées sur la carte à circuits imprimés 23 et destinés à signaler l'état du dispositif. Préférentiellement, le couvercle 22 du boîtier comporte une partie transparente permettant de diffuser la lumière émise par les diodes.

Le dispositif comporte également une tige de guidage 90 de l'ensemble de commande. Cette tige est fixée sur le support 21 et traverse l'ouverture centrale 24 du couvercle. L'organe de commande 12 est enfilé sur la tige 90 et peut coulisser le long de celle-ci, en liaison avec le bouton de commande 11.

Selon l'invention, lorsque le dispositif est actionné et verrouillé, la seule rotation de la bague ne modifie pas l'état des contacts, qui restent à l'état ouvert. La rotation de la bague doit être accompagnée d'une identification positive d'un badge pour faire remonter l'ensemble de commande et ramener les contacts à l'état fermé.

## Revendications

1. Dispositif d'arrêt d'urgence comportant :
- au moins une unité de contact électrique de type normalement fermé,
- un ensemble de commande actionnable en translation suivant un axe de commande (X) entre une position relâchée et une position actionnée et coopérant avec l'unité de contact,
- un organe de verrouillage (60) coopérant avec l'ensemble de commande et apte à prendre une position de verrouillage pour maintenir l'ensemble ce commande dans sa position actionnée,
- un dispositif de lecture comprenant un microcontrôleur agencé pour générer une commande d'autorisation de déverrouillage de l'ensemble de commande,
- un actionneur de déverrouillage (70) agencé pour recevoir la commande d'autorisation de déverrouillage et pour agir sur l'organe de verrouillage (60) en vue de libérer l'ensemble de commande de sa position actionnée,
- **caractérisé en ce qu'**il comporte :
- un organe d'actionnement (51) actionnable en mouvement pour générer une énergie mécanique,
- un générateur d'énergie (50A, 50B) agencé pour convertir l'énergie mécanique fournie par un mouvement de l'organe d'actionnement (51) en une énergie électrique destinée à alimenter le dispositif de lecture.

2. Dispositif selon la revendication 1, **caractérisé en ce que** le dispositif de lecture est de type RFID et **en ce qu'**il comporte une antenne (40) connectée au microcontrôleur.

3. Dispositif selon la revendication 2, **caractérisé en ce que** l'antenne (40) est agencée de manière coaxiale autour de l'axe de commande (X).

4. Dispositif selon la revendication 2 ou 3, **caractérisé en ce qu'**il comporte un prolongateur d'antenne (41) agencé pour être en couplage magnétique avec ladite antenne (40).

5. Dispositif selon la revendication 1, caractérisé en ce le dispositif de lecture est de type biométrique.

6. Dispositif selon la revendication 1, **caractérisé en ce que** le dispositif de lecture est de type NFC.

7. Dispositif selon la revendication 1, **caractérisé en ce que** l'ensemble de commande comporte un bouton de commande (11) mobile suivant la direction axiale entre une position relâchée et une position enfoncée.

8. Dispositif selon la revendication 7, **caractérisé en ce que** le bouton de commande (11) comporte un logement (110) agencé pour recevoir un badge (3).

9. Dispositif selon la revendication 1, **caractérisé en ce que** l'actionneur de déverrouillage comporte un solénoïde doté d'un poussoir (700) et d'une bobine électromagnétique agencée pour être alimentée par le signal d'autorisation de déverrouillage.

10. Dispositif selon la revendication 1, **caractérisé en ce que** l'organe d'actionnement est une bague (51) mobile en rotation, agencée de manière coaxiale à l'ensemble de commande.

11. Dispositif selon l'une des revendications 1 à 10, **caractérisé en ce que** le générateur (50A, 50B) est de type électromagnétique et comporte un élément mobile coopérant avec l'organe d'actionnement, au moins un aimant permanent et une bobine électromagnétique agencés pour se déplacer l'un par rapport à l'autre en vue de créer un courant électrique induit dans ladite bobine électromagnétique.

## Patentansprüche

1. Notausschaltvorrichtung, die aufweist:
- mindestens ein elektrisches Kontaktbauteil von normalerweise geschlossener Art,
- eine gemäß einer Steuerachse (X) zwischen einer losgelassenen Stellung und einer betätigten Stellung translatorisch betätigbare Steuereinheit, die mit dem Kontaktbauteil zusammenwirkt,
- ein Verriegelungsorgan (60), das mit der Steuereinheit zusammenwirkt und fähig ist, eine Verriegelungsstellung einzunehmen, um die Steuereinheit in ihrer betätigten Stellung zu halten,
- eine Lesevorrichtung, die einen Mikrocontroller enthält, der eingerichtet ist, um eine Entriegelungsgenehmigungssteuerung der Steuereinheit zu erzeugen,
- ein Entriegelungsstellglied (70), das eingerichtet ist, um die Entriegelungsgenehmigungssteuerung zu empfangen und um auf das Verriegelungsorgan (60) einzuwirken, um die Steuereinheit aus ihrer betätigten Stellung freizugeben,
**dadurch gekennzeichnet, dass** sie aufweist:
- ein Betätigungsorgan (51), das in Bewegung betätigbar ist, um eine mechanische Energie zu erzeugen,
- einen Energieerzeuger (50A, 50B), der eingerichtet ist, um die durch eine Bewegung des Betätigungsorgans (51) gelieferte mechanische Energie in eine elektrische Energie umzuwandeln, die dazu bestimmt ist, die Lesevorrichtung zu speisen.

2. Vorrichtung nach Anspruch 1, **dadurch gekennzeichnet, dass** die Lesevorrichtung von der Art RFID ist, und dass sie eine mit dem Mikrocontroller verbundene Antenne (40) aufweist.

3. Vorrichtung nach Anspruch 2, **dadurch gekennzeichnet, dass** die Antenne (40) koaxial um die Steuerachse (X) herum angeordnet ist.

4. Vorrichtung nach Anspruch 2 oder 3, **dadurch gekennzeichnet, dass** sie eine Antennenverlängerung (41) aufweist, die eingerichtet ist, um mit der Antenne (40) magnetisch gekoppelt zu sein.

5. Vorrichtung nach Anspruch 1, **dadurch gekennzeichnet, dass** die Lesevorrichtung von biometrischer Art ist.

6. Vorrichtung nach Anspruch 1, **dadurch gekennzeichnet, dass** die Lesevorrichtung von der Art NFC ist.

7. Vorrichtung nach Anspruch 1, **dadurch gekennzeichnet, dass** die Steuereinheit einen Steuerknopf (11) aufweist, der in axialer Richtung zwischen einer losgelassenen Stellung und einer eingedrückten Stellung beweglich ist.

8. Vorrichtung nach Anspruch 7, **dadurch gekennzeichnet, dass** der Steuerknopf (11) eine Aufnahme (110) aufweist, die eingerichtet ist, um ein Badge (3) aufzunehmen.

9. Vorrichtung nach Anspruch 1, **dadurch gekennzeichnet, dass** das Entriegelungsstellglied ein Solenoid aufweist, das mit einem Drücker (700) und einer elektromagnetischen Spule ausgestattet ist, die eingerichtet ist, um mit dem Entriegelungsberechtigungssignal gespeist zu werden.

10. Vorrichtung nach Anspruch 1, **dadurch gekennzeichnet, dass** das Betätigungsorgan ein in Drehung beweglicher Ring (51) ist, der koaxial zur Steuereinheit angeordnet ist.

11. Vorrichtung nach einem der Ansprüche 1 bis 10, **dadurch gekennzeichnet, dass** der Erzeuger (50A, 50B) von elektromagnetischer Art ist und ein bewegliches Element, das mit dem Betätigungsorgan zusammenwirkt, mindestens einen Dauermagnet und eine elektromagnetische Spule aufweist, die eingerichtet sind, um sich zueinander zu verschieben, um einen elektrischen Strom zu erzeugen, der in die elektromagnetische Spule induziert wird.

## Claims

1. Emergency stop device comprising:
- at least one electrical contact unit of the normally closed type,
- a control assembly which can be actuated in translation along a control axis (X) between a released position and an actuated position, and cooperating with the contact unit,
- a locking element (60) cooperating with the control assembly and able to assume a locking position to hold the control assembly in its actuated position,
- a read device comprising a microcontroller configured to generate an unlocking authorisation command of the control assembly,
- an unlocking actuator (70) configured to receive the unlocking authorisation command, and to act on the locking device (60) with the aim of releasing the control assembly from its actuated position,
- **characterized in that** it comprises:
- an actuating element (51) which can be actuated in movement to generate a mechanical energy,
- an energy generator (50A, 50B) configured to convert the mechanical energy supplied by a movement of the actuating element (51) into an electrical energy intended to power the read device.

2. Device according to claim 1, **characterized in that** the read device is of the RFID type, and **in that** it comprises an antenna (40) connected to the microcontroller.

3. Device according to claim 2, **characterized in that** the antenna (40) is arranged coaxially around the control axis (X).

4. Device according to claim 2 or 3, **characterized in that** it comprises an antenna extension (41) arranged to be in magnetic coupling with said antenna (40).

5. Device according to claim 1, **characterized in that** the read device is of the biometric type.

6. Device according to claim 1, **characterized in that** the read device is of the NFC type.

7. Device according to claim 1, **characterized in that** the control assembly comprises a control button (11) moveable in the axial direction between a released position and a depressed position.

8. Device according to claim 7, **characterized in that** the control button (11) comprises a housing (110) configured to receive a badge (3).

9. Device according to claim 1, **characterized in that** the unlocking actuator comprises a solenoid provided with a tappet (700) and an electromagnetic coil configured to be powered by the unlocking authorisation signal.

10. Device according to claim 1, **characterized in that** the actuating element is a ring (51) moveable in rotation and arranged coaxially to the control assembly.

11. Device according to any of claims 1 to 10, **characterized in that** the generator (50A, 50B) is of the electromagnetic type and comprises a moveable element cooperating with the actuating element, at least one permanent magnet and an electromagnetic coil configured to move relative to each other in order to create an induced electrical current in said electromagnetic coil.
